# EUROPEAN PATENT APPLICATION

(11) **EP 3 893 486 A1**
(43) Date of publication of application: **13.10.2021**
(21) Application number: 19893281.6
(22) Date of filing: 18.10.2019
(51) Int. Cl.: H04N 5/232, B25J 13/08, B25J 19/04, G01B 11/00, G03B 17/02, H04N 5/222, H04N 5/225

(54) **IMAGING DEVICE, IMAGING SYSTEM, AND INDUSTRIAL ROBOT**

(30) Priority: 05.12.2018 JP 2018228509
(71) Applicant: Mitsumi Electric Co., Ltd., Tama-Shi, Tokyo 206-8567 (JP)
(72) Inventor: MORIMOTO, Kazuyuki, Tama-shi, Tokyo 206-8567 (JP)
(74) Representative: Dr. Solf & Zapf Patent- und Rechtsanwalts PartG mbB
(86) International application number: PCT/JP2019/041108
(87) International publication number: WO 2020/116041

(57) **Abstract**

An imaging device 1 contains an elongated cylindrical housing 2 having a tip side opening 21 and a base side opening 22, a control unit 4 provided in the housing 2 and having a control processor 42 and a memory 43, a camera module 5 provided in the housing 2 so as to be capable of imaging an outside on a tip side of the housing 2 from the tip side opening 21 of the housing 2 in response to control from the control processor 42 of the control unit 4, and a connector 6 provided in the housing 2 so that a tip portion of the connector 6 is exposed from the base side opening 22 of the housing 2 toward an outside on a base side of the housing 2. The memory 43 of the control unit 4 stores parameters for correcting distortion of an image obtained by the camera module 5.

## Description

### TECHNICAL FIELD

The present invention generally relates to imaging devices, imaging systems and industrial robots, in particular to an imaging device whose components are provided in an elongated cylindrical housing and which includes a memory storing parameters for correcting distortion of an image obtained by the imaging device, an imaging system and an industrial robot including the imaging device.

### BACKGROUND ART

In recent years, in order to respond to needs for improvement in productivity, industrial robots have been widely introduced in labor-intensive fields such as parts assembly and product packing in addition to conventional fields such as a parts manufacturing field in which the industrial robots have been introduced. An industrial robot used in such a labor-intensive field includes a robot arm, a robot hand for picking up an object and an imaging device for recognizing the object. The industrial robot is configured to use its own robot arm and robot hand to perform operations of picking up, assembling and packing the object such as parts. These operations have been conventionally performed by a human hand.

The industrial robot as described above is configured to pick up, assemble or pack various objects having various sizes, various weights and various shapes depending on settings for the operations. In order to pick up, assemble or pack the objects having the various sizes, the various weights and the various shapes, the industrial robot needs to use the imaging device to accurately identify a position, a size and a shape of the object.

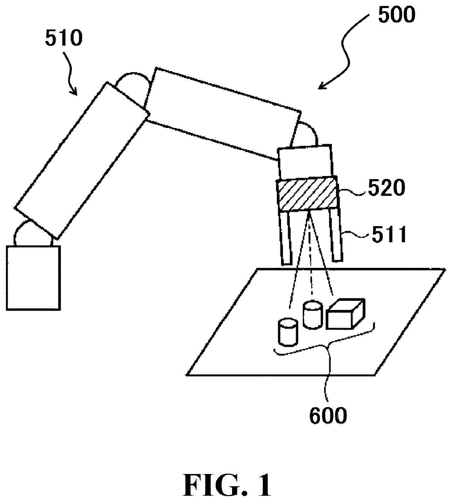

For example, patent document 1 discloses an industrial robot 500 for picking up an object 600 such as parts as shown in Fig. 1. The industrial robot 500 shown in Fig. 1 includes a robot arm 510 constituted of a plurality of movable portions which can bend and an imaging device 520 provided at a tip end portion of the robot arm 510. The robot arm 510 is constituted of a serial link multi-joint mechanism in which a plurality of links and a plurality of joints are serially connected and which has three or more axis degrees of operation freedom (typically six axis degrees of operation freedom). The robot arm 510 can perform three-dimensional spatial work.

The robot arm 510 has a robot hand 511 provided at the tip end portion thereof and can use the robot hand 511 to grip the object 600 for picking up the object 600. In the industrial robot 500 as described above, the imaging device 520 is provided at the tip end portion of the robot arm 510 so that a direction of the imaging device 520 (an optical axis direction of a lens unit of the imaging device 520) coincides with a direction of the robot hand 511. With this configuration, it is possible to obtain an image following movement of the robot hand 511 of the industrial robot 500 with the imaging device 520.

Since a position, a size, a shape and the like of the object 600 can be identified by imaging the object 600 with the imaging device 520, the industrial robot 500 can perform an operation of picking up the object 600.

In the industrial robot 500 as shown in Fig. 1, the imaging device 520 is provided at the tip end portion of the robot arm 510 which is a movable portion. Thus, if a weight of the imaging device 520 is heavy, it is required to use large driving force (large torque at the tip end portion of the robot arm 510) for diving the robot arm 510 to pick up the object 600. Thus, the heavy weight of the imaging device 520 causes problems such as increase of power consumption and cost of the industrial robot 500. Further, if a size of the imaging device 520 is large, the tip end portion of the robot arm 510 to which the imaging device 520 is mounted also becomes large. As a result, a size and a weight of the tip end portion of the robot arm 510 also increase. Thus, the large size of the imaging device 520 causes problems such as increase of the power consumption, the cost and the size of the industrial robot 500. For these reasons, there are strong needs for weight reduction and downsizing of the imaging device 520 used in an industrial robot such as the industrial robots 500.

On the other hand, if the imaging device 520 is downsized, a lens unit and an image sensor used in the imaging device 520 are required to be also downsized. Thus, it becomes difficult to suppress aberrations of the lens unit, warpage of the image sensor caused at the time of fixing the image sensor with a resin agent and an assembly error when assembling the lens unit and the image sensor. As a result, distortion of the image obtained by the imaging device 520 occurs. The distortion of the image makes it very difficult to accurately measure the position, the size and the shape of the object 600 which should be picked up by the robot hand 511 of the industrial robot 500.

Generally, in order to correct the above-described distortion of the image, parameters of an approximate expression representing the distortion of the image obtained by the imaging device 520 are calculated to subject image processing on the image for correcting the distortion of the image with the parameter. A user who manufactures the industrial robot 500 with the imaging device 520 performs an operation called "calibration" in order to obtain the parameters required for the image processing for correcting the distortion of the image. In the calibration, the user uses the imaging device 520 to image a predetermined reference chart such as a checkered chart in which elements each having a known size are continuously arranged from various angles to identify the parameters of the approximate expression representing the distortion of the image.

Since it is necessary to prepare a reference chart having high accuracy and accurately image the reference chart many times in steps of the calibration as described above, the calibration is a difficult and complicated operation for the user who manufactures the industrial robot 500. Therefore, there are needs to eliminate the necessity of the calibration when manufacturing the industrial robot 500 in addition to the needs to reduce the weight and the size of the imaging device 520.

### RELATED ART DOCUMENT

### [Patent document]

Patent document 1: JP 2018-146521A

### SUMMARY OF THE INVENTION

### PROBLEMS TO BE SOLVED BY THE INVENTION

The present invention has been made in view of the above-mentioned problems of the conventional art. Accordingly, it is an object of the present invention to provide an imaging device whose weight and size of the imaging device are reduced and which can eliminate necessity of calibration when manufacturing an industrial robot, an imaging system and an industrial robot including the imaging device.

### MEANS FOR SOLVING THE PROBLEMS

This object is achieved by the present inventions as defined in the following (1) to (9).
(1) An imaging device, comprising:
   an elongated cylindrical housing having openings on a tip side and a base side;
   a control unit provided in the housing and having a control processor and a memory;
   a camera module provided in the housing so as to be capable of imaging an outside on the tip side of the housing from the opening of the housing on the tip side in response to control from the control processor of the control unit; and
   a connector provided in the housing so that a tip portion of the connector is exposed from the opening of the housing on the base side toward an outside on the base side of the housing,
   wherein the memory of the control unit stores parameters for correcting distortion of an image obtained by the camera module.
(2) The imaging device according to the above (1), wherein the housing has a cylindrical enlarged diameter portion formed on a base end portion of the housing and a cylindrical small diameter portion formed on a tip end portion of the housing nearer to the tip side than the enlarged diameter portion,
   wherein an outer diameter of the enlarged diameter portion is larger than an outer diameter of the small diameter portion, and
   wherein a screw thread is formed on an outer periphery of the small diameter portion.
(3) The imaging device according to the above (2), wherein the enlarged diameter portion and the small diameter portion of the housing are formed integrally with each other.
(4) The imaging device according to the above (2) or (3), wherein the screw thread of the small diameter portion is configured to be screwed with a fixing tool having a female screw structure meeting a predetermined industry standard.
(5) The imaging device according to any one of the above (1) to (4), wherein the housing is formed from a conductive material, and
   wherein the connector is fixed in the housing by a conductive elastic member provided between an upper surface of the connector and an inner surface of the housing.
(6) The imaging device according to the above (5), wherein the connector is configured so that a ground terminal of a mating connector is electrically connected to the housing through the conductive elastic member when the mating connector is inserted into the connector.
(7) The imaging device according to any one of the above (1) to (6), wherein the camera module includes a lens unit and an image sensor, and
   wherein the lens unit and the image sensor are provided in the housing so that an optical axis of the lens unit is parallel to a lengthwise direction of the housing.
(8) An imaging system comprising:
   an imaging device defined by any one of the above (1) to (7); and
   an image processing device for receiving the image obtained by the camera module of the imaging device and performing image processing in order to correct the distortion of the image with reference to the parameters stored in the memory of the control unit of the imaging device.
(9) An industrial robot for picking up an object, comprising:
   a robot arm having a robot hand for picking up the object;
   an imaging device defined by any one of the above (1) to (7) and provided at a tip end portion of the robot arm; and
   a control device for receiving the image obtained by the camera module of the imaging device and performing image processing in order to correct the distortion of the image with reference to the parameters stored in the memory of the control unit of the imaging device,
   wherein the control device is configured to control the robot arm based on the image on which the image processing is subjected to allow the robot hand to pick up the object.

### EFFECTS OF THE INVENTION

In the present invention, a weight and a size of the imaging device is reduced to a level equal to or less than a weight and a size of a male screw (for example, an M10 screw) meeting a predetermined industrial standard. Thus, it is possible to reduce driving force of the industrial robot required when the imaging device of the present invention is provided at a tip end portion of a movable portion (the robot arm) of the industrial robot. By using the imaging device of the present invention, it is possible to suppress power consumption of the industrial robot and reduce a cost and a size of the industrial robot.

Further, in the present invention, the parameters required for correcting the distortion of the image obtained by the imaging device is stored in the memory of the control unit of the imaging device. A user who manufactures the industrial robot with the imaging device can obtain the parameters required for correcting the distortion of the image obtained by the imaging device only by reading the parameters stored in the memory of the controller of the imaging device. Therefore, by using the imaging device of the present invention, it is possible to eliminate necessity of calibration when manufacturing the industrial robot.

### BRIEF DESCRITION OF THE FIGURES

[Fig. 1] Fig. 1 is a schematic view for explaining a conventional imaging device used in an industrial robot.
[Fig. 2] Fig. 2 is a perspective view showing an imaging device according to an embodiment of the present invention.
[Fig. 3] Fig. 3 is a perspective view taken by viewing the imaging device shown in Fig. 2 from another angle.
[Fig. 4] Fig. 4 is an exploded perspective view showing an internal structure of the imaging device shown in Fig. 2.
[Fig. 5] Fig. 5 is an exploded perspective view of the internal structure of the imaging device shown in Fig. 4.
[Fig. 6] Fig. 6 is a Y-Z plane cross-sectional view of the imaging device shown in Fig. 2.
[Fig. 7] Fig. 7 is a perspective view showing an example of an attachment for attaching the imaging device shown in Fig. 2.
[Fig. 8] Fig. 8 is a perspective view showing a state that the imaging device is attached to the attachment shown in Fig. 8.
[Fig. 9] Fig. 9 is an X-Z plane cross-sectional view showing the state that the imaging device is attached to the attachment shown in Fig. 7.
[Fig. 10] Fig. 10 is a perspective view showing another example of the attachment for attaching the imaging device shown in Fig. 2.
[Fig. 11] Fig. 11 is a perspective view showing a state that the imaging device is attached to the attachment shown in Fig. 10.
[Fig. 12] Fig. 12 is an X-Z cross-sectional view showing the state that the imaging device is attached to the attachment shown in Fig. 10.
[Fig. 13] Fig. 13 is a schematic view showing an imaging system according to an embodiment of the present invention.
[Fig. 14] Fig. 14 is a schematic view showing a robot arm of an industrial robot according to an embodiment of the present invention.

### DETAILED DESCRIPTION

Hereinafter, description will be given to an imaging device, an imaging system and an industrial robot of the present invention with reference to preferred embodiments shown in the accompanying drawings. Note that each of the drawings referred in the following description is a schematic diagram prepared for explaining the present invention. A dimension (such as a length, a width and a thickness) of each component shown in the drawings is not necessarily identical to an actual dimension. Further, the same reference numbers are used throughout the drawings to refer to the same or similar elements. Hereinafter, a positive direction of the Z-axis in each figure is referred to as "a tip side", a negative direction of the Z-axis in each figure is referred to as "a base side", a positive direction of the Y-axis in each figure is referred to as "an upper side", a negative direction of the Y-axis in each figure is referred to as "a lower side", a positive direction of the X-axis in each figure is referred to as "a front side" and a negative direction of the X-axis in each figure is referred to as "a rear side".

### <Imaging device>

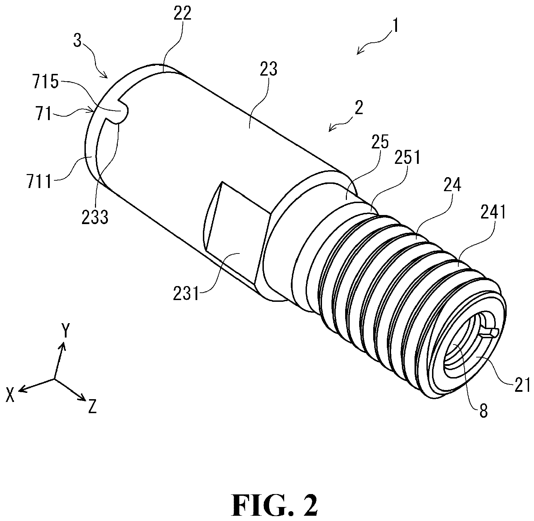

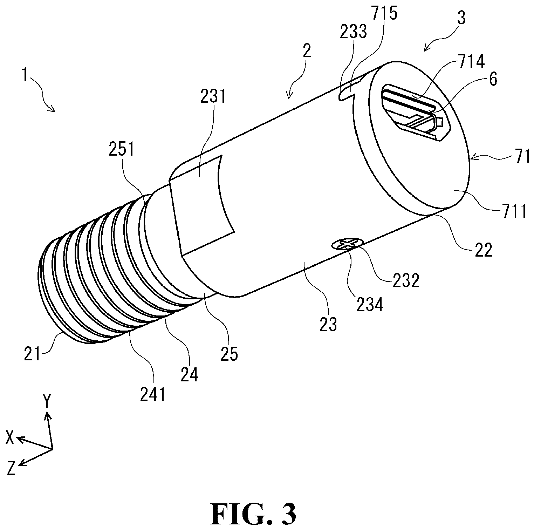

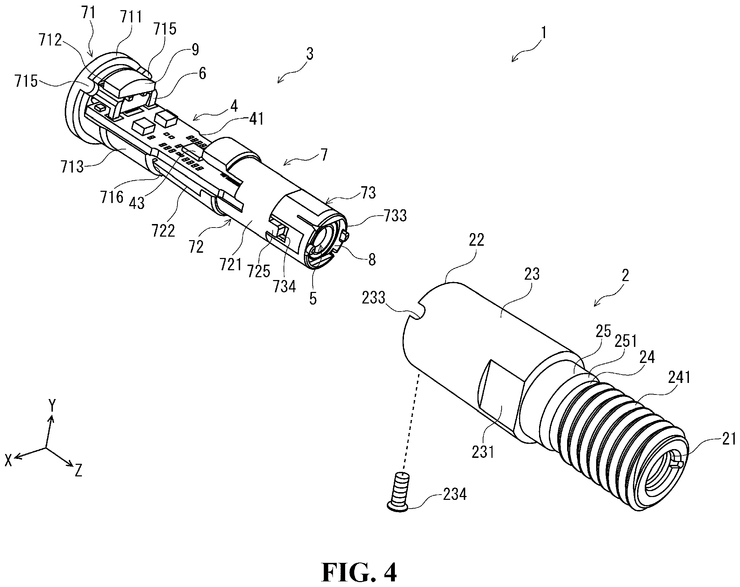

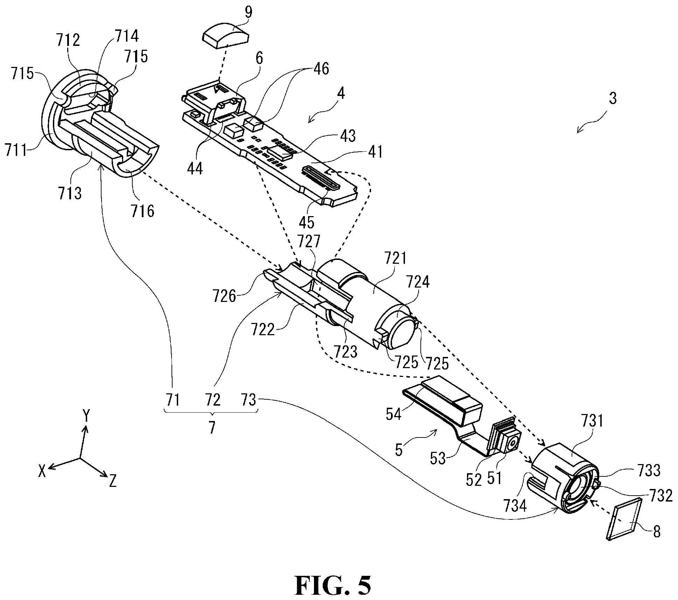

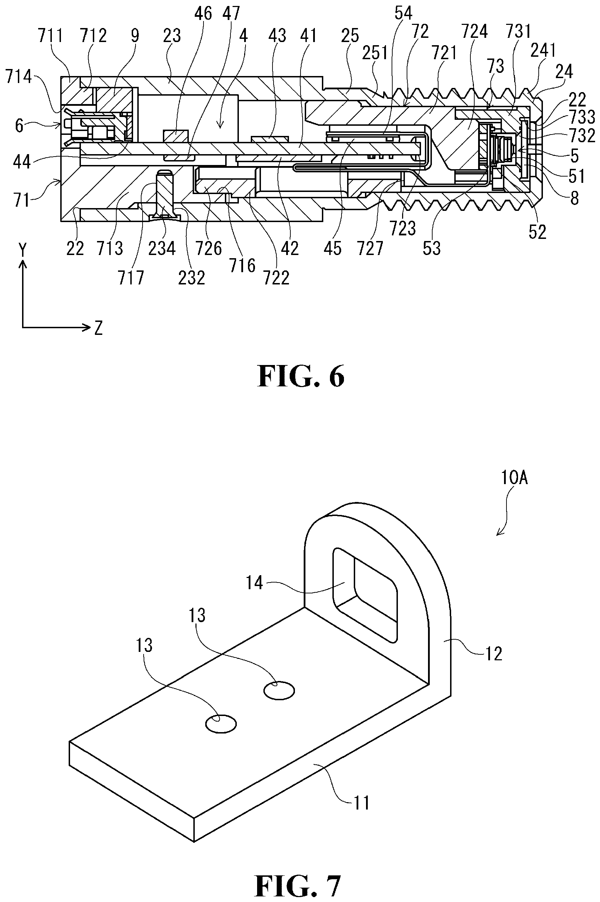

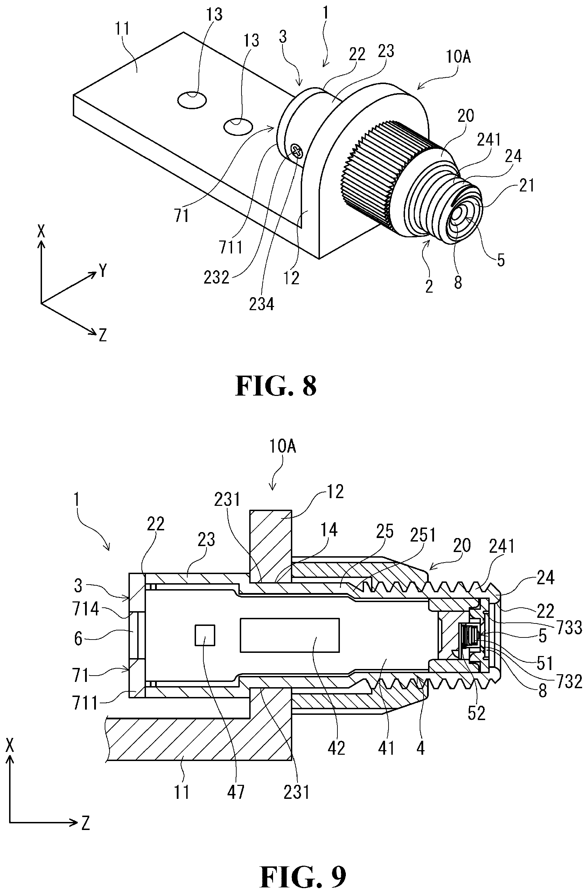

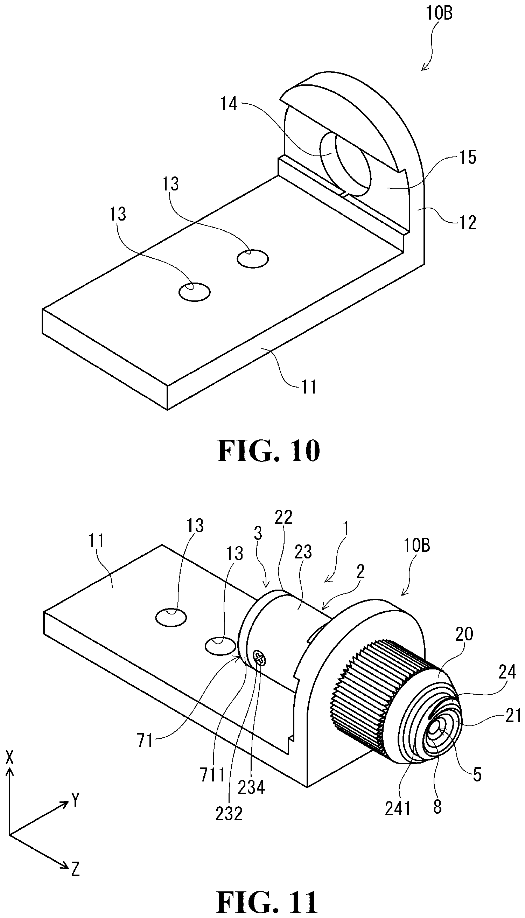

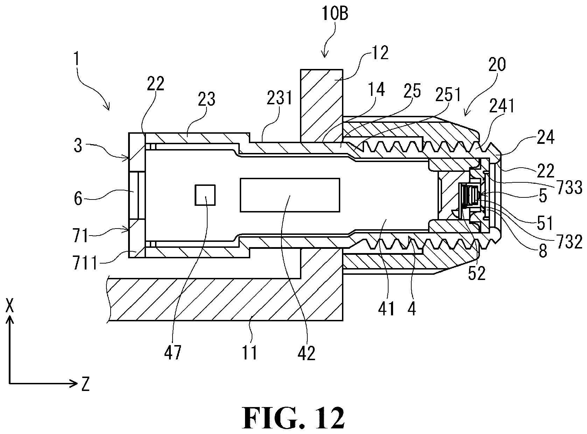

First, an imaging device according to an embodiment of the present invention will be described in detail with reference to Figs. 2 to 12. Fig. 2 is a perspective view showing the imaging device according to the embodiment of the present invention. Fig. 3 is a perspective view taken by viewing the imaging device shown in Fig. 2 from another angle. Fig. 4 is an exploded perspective view showing an internal structure of the imaging device shown in Fig. 2. Fig. 5 is an exploded perspective view of the internal structure of the imaging device shown in Fig. 4. Fig. 6 is a Y-Z cross-sectional view of the imaging device shown in Fig. 2. Fig. 7 is a perspective view showing an example of an attachment for attaching the imaging device shown in Fig. 2. Fig. 8 is a perspective view showing a state that the imaging device is attached to the attachment shown in Fig. 8. Fig. 9 is an X-Z plane cross-sectional view showing the state that the imaging device is attached to the attachment shown in Fig. 7. Fig. 10 is a perspective view showing another example of the attachment for attaching the imaging device shown in Fig. 2. Fig. 11 is a perspective view showing a state that the imaging device is attached to the attachment shown in Fig. 10. Fig. 12 is an X-Z plane cross-sectional view showing the state that the imaging device is attached to the attachment shown in Fig. 10.

An imaging device 1 shown in Figs. 2 and 3 is mainly attached to a tip end portion of a robot arm of an industrial robot and used for imaging an object such as parts to be picked up by the industrial robot. Although the imaging device 1 will be described in detail in the specification with assuming that the imaging device 1 should be attached to the tip end portion of the robot arm of the industrial robot, an application field of the imaging device 1 is not limited to the industrial robot. For example, the imaging device 1 may be used with being attached to a vehicle, an arbitrary device such as a smart phone and a personal computer or a structure such as a door and a window.

As shown in Figs. 2 and 3, the imaging device 1 has a substantially male screw-like appearance. A size and a weight of the imaging device 1 are not particularly limited. For example, a total length of the imaging device 1 is about 35.5 mm and the weight of the imaging device 1 is about 5 g in the present embodiment. Since a total length of a standard male screw meeting the M10 screw standard is several tens of millimeters and a weight of the M10 screw standard is several tens of grams, the weight and the size of the imaging device 1 are reduced to a level equal to or less than a size and a weight of a male screw meeting a predetermined industry standard (for example, the M10 screw standard).

As shown in Fig. 4, the imaging device 1 includes an elongated cylindrical housing 2 having a tip side opening 21 and a base side opening 22 and an internal structure 3 contained in the housing 2. As shown in Fig. 5, the internal structure 3 includes a control unit 4 provided in the housing 2 and having a control processor 42 (see Fig. 6) and a memory 43, a camera module 5 provided in the housing 2 so as to be capable of imaging an outside on the tip side of the housing 2 from the tip side opening 21 of the housing 2, a connector 6 provided in the housing 2 so that a tip portion of the connector 6 (an insertion port for a mating connector) is exposed to an outside on the base side of the housing 2 from the base side opening 22 of the housing 2, a holder 7 for fixing the control unit 4, the camera module 5 and the connector 6 in the housing 2, a cover glass 8 for protecting the camera module 5 and a conductive elastic member 9 provided between an upper surface of the connector 6 and an inner surface of the housing 2 for fixing the connector 6 in the housing 2.

Referring back to Fig. 4, the housing 2 has an elongated cylindrical shape with the tip side opening 21 and the base side opening 22. The housing 21 has a function of containing the internal structure 3 therein. The cylindrical shape of the housing 2 is an elongated shape in which a total length of the housing 2 is at least twice longer than a maximum outer diameter of the housing 2. Thus, the housing 2 is configured to form a substantially male screw-like appearance as a whole. The total length and the maximum outer diameter of the housing 2 are not particularly limited. For example, the total length (a length in the Z-axis direction) of the housing 2 is about 34 mm and the maximum outer diameter of the housing 2 is about 12 mm in the present embodiment.

Although the housing 2 can be formed from a conductive material such as a metallic material, it is particularly preferable that the housing 2 is formed from aluminum or an aluminum alloy. Since the aluminum or the aluminum alloy has high electrical conductivity and is also very light, it is possible to reduce the weight of the imaging device 1 by forming the housing 2 with the aluminum or the aluminum alloy.

The housing 2 includes a cylindrical enlarged diameter portion 23 formed on a base end portion of the housing 2, a cylindrical small diameter portion 24 formed on a tip end portion of the housing 2 and a cylindrical connecting portion 25 for connecting the enlarged diameter portion 23 and the small diameter portion 24. When comparing outer diameters of the enlarged diameter portion 23, the small diameter portion 24 and the connecting portion 25 with each other, the outer diameter of the enlarged diameter portion 23 is largest, the outer diameter of the connecting portion 25 is second-largest and the outer diameter of the small diameter portion 24 is smallest.

The enlarged diameter portion 23, the small diameter portion 24 and the connecting portion 25 are integrally formed with each other. The connecting portion 25 is formed integrally with a tip end surface of the enlarged diameter portion 23 and the small diameter portion 24 is formed integrally with a tip end portion of the connecting portion 25.

The enlarged diameter portion 23, the small diameter portion 24 and the connecting portion 25 are formed so that their central axes in the lengthwise direction coincide with each other. As shown in Fig. 6, a space defined by an inner surface of the enlarged diameter portion 23, a space defined by an inner surface of the small diameter portion 24 and a space defined by an inner surface of the connecting portion 25 are linearly communicated with each other in the housing 2.

Referring back to Fig. 4, the base side opening 22 of the housing 2 is defined by a base end portion of the enlarged diameter portion 23. The internal structure 3 is inserted into the housing 2 through the base side opening 22 of the housing 2. As shown in Fig. 6, in a state that the imaging device 1 is assembled, the tip portion of the connector 6 (the insertion port for the mating connector) is exposed to the outside on the base side of the housing 2 through the base side opening 22 of the housing 2. A size of the enlarged diameter portion 23 is not particularly limited. For example, the outer diameter of the enlarged diameter portion 23 is about 12 mm and a total length of the enlarged diameter portion 23 is about 16 mm in the present embodiment.

As shown in Fig. 4, the enlarged diameter portion 23 includes a pair of D-cut portions 231 formed on both lateral side (X-axis direction sides) portions of an outer periphery of the enlarged diameter portion 23, a through hole 232 (see Fig. 3) formed in a lower side (a negative direction side of the Y-axis) portion of the outer periphery of the enlarged diameter portion 23 and a pair of engagement recesses 233 formed on an upper side (a positive direction side of the Y-axis) portion of a base end surface of the enlarged diameter portion 23.

Each of the pair of D-cut portions 231 is a flat surface formed by processing an X-axis direction part of the outer periphery of the enlarged diameter portion 23 so as to be perpendicular to the X-axis and Z-axis. The pair of D-cut portions 231 engage with an attachment 10A or 10B (see Figs. 7 and 10) described later to prevent the imaging device 1 from rotating when the imaging device 1 is attached to the attachment 10A or 10B. A size of each of the pair of D-cut portions 231 is not particularly limited. For example, each of the D-cut portions 231 has a length (a length in the Z-axis direction) of about 6 mm, a width (a length in the Y-axis direction) of about 10 mm and a depth of about 2 mm in the present embodiment.

As shown in Figs. 3 and 6, the through hole 232 is formed in the lower side (the negative direction side of the Y-axis) portion of the outer periphery of the enlarged diameter portion 23. A set screw 234 (see Fig. 4) is passed through the through hole 232 for fixing the internal structure 3 in the housing 2. In a state that the inner structure 3 is contained in the housing 2, the set screw 234 is screwed with a screw hole 717 (see Fig. 6) formed on the holder 7 of the inner structure 3 through the through hole 232, and thereby the inner structure 3 is fixed in the housing 2.

Each of the pair of engagement recesses 233 is a U-shaped notch formed on an upper side (the positive direction side of the Y-axis) portion of the base end surface of the enlarged diameter portion 23 so as to be spaced apart from each other by a predetermined distance. When the internal structure 3 is contained into the housing 2 through the base side opening 22 of the housing 2, the inner structure 3 is inserted into the housing 2 so that the pair of engagement recesses 233 respectively engage with a pair of engagement protrusions 715 formed on the holder 7 of the inner structure 3, and thereby the internal structure 3 is positioned with respect to the housing 2.

The tip side opening 21 of the housing 2 is defined by a tip end portion of the small diameter portion 24. As shown in Fig. 6, in the state that the imaging device 1 is assembled, the camera module 5 is directed toward the outside on the tip side of the housing 2 through the tip side opening 21, and thereby the camera module 5 can image the outside on the tip side of the housing 2 from the inside of the housing 2.

A screw thread 241 is formed on an outer peripheral surface of the small diameter portion 24. The small diameter portion 24 has a shape corresponding to a threaded portion of a male screw meeting a predetermined industry standard. For example, in a case where the small diameter portion 24 has a shape corresponding to a threaded portion of a male screw meeting the M10 screw standard, the outer diameter of the small diameter portion 24 (an outer diameter of a top portion of the screw thread 241) is about 10 mm. Further, other dimensions such as a pitch and a height of the screw thread 241 are set so as to meet the predetermined industry standard. Therefore, the screw thread 241 of the small diameter portion 24 can be screwed with a fixing tool such as a nut having a female screw structure meeting the predetermined industry standard. A length of the small diameter portion 24 is not particularly limited. For example, a total length of the small diameter portion 24 is about 13 mm in the present embodiment.

The connecting portion 25 connects between the tip end surface of the enlarged diameter portion 23 and the base end surface of the small diameter portion 24. A tapered portion 251 is formed on a tip end portion of the connecting portion 25. An outer diameter of the tapered portion 251 of the connecting portion 25 monotonically decreases toward the tip side. At a connecting portion between the tapered portion 251 and the small diameter portion 24, the outer diameter of the tapered portion 251 is substantially equal to an outer diameter of a valley portion of the screw thread 241 of the small diameter portion 24.

As described above, the appearance shape of the housing 2 is a male screw-like shape, the enlarged diameter portion 23 corresponds to a screw head of the male screw-like shape and the small diameter portion 24 corresponds to a screw portion of the male screw-like shape. In addition, since the screw thread 241 of the small diameter portion 24 is configured so as to be screwed with a fixing tool such as a nut having the female screw structure meeting the predetermined industry standard, it is possible to attach or fix the imaging device 1 with general-purpose fixing tools meeting the predetermined industry standard. Therefore, it is possible to easily attach the imaging device 1 to an arbitrary device such as a robot arm of an industrial robot.

Next, description will be given to each component of the internal structure 3 contained in the housing 2 with reference to Figs. 5 and 6. The control unit 4 of the internal structure 3 has a function of controlling an operation of the camera module 5. The control unit 4 includes a control substrate 41 provided in the housing 2, the control processor 42 mounted on the control substrate 41, the memory 43 mounted on the control substrate 41, a connector terminal group 44 to which the connector 6 is connected, a camera module connector 45 to which the camera module 5 is connected, an LDO (Low Dropout) chip 46 and a clock chip 47.

The control substrate 41 is a substantially rectangular substrate in a planar view and is disposed in the housing 2. A PCB substrate or the like can be used as the control substrate 41. Respective components of the control unit 4 are mounted on the control substrate 41 and the components of the control unit 4 are electrically connected to each other through wires formed on the control substrate 41.

As shown in Fig. 6, the control processor 42 is mounted on a substantially central portion of a lower surface of the control substrate 41 and controls the operation of the camera module 5. The control processor 42 is one or more operation units such as microprocessors, microcomputers, microcontrollers, digital signal processors (DSPs), central processing units (CPUs), memory control units (MCUs), graphic processing units (GPUs), state machines, logic circuits, application specific integrated circuits (ASICs) and combinations thereof that can perform operational processes such as signal manipulation based on computer-readable instructions.

The memory 43 is mounted on a substantially central portion of an upper surface of the control substrate 41 and stores data, computer readable instructions and the like used by the control processor 42. It is possible to use a nonvolatile storage medium (such as ROM, EPROM, EEPROM and flash memory) can be used as the memory 43. Further, in the imaging device 1 of the present invention, the memory 43 stores parameters for correcting distortion of an image obtained by the camera module 5.

As described in the section of "BACKGROUND ART", the parameters required for correcting the distortion of the image obtained by the camera module 5 are obtained through a work called "calibration" in which a predetermined reference chart is imaged from various angles by the imaging device 1 to identify parameters of an approximate expression representing the distortion of the image.

The calibration is performed by a manufacturer or an administrator of the imaging device 1 at the time of manufacturing or shipping the imaging device 1 and then the parameters obtained through the calibration are stored in the memory 43 at the time of manufacturing or shipping the imaging device 1. Thus, a user who purchases the imaging device 1 to manufacture an industrial robot with the imaging device 1 can obtain the parameters required for correcting the distortion of the image obtained by the camera module 5 by reading the parameters stored in the memory 43 without performing the calibration for the imaging device 1. Therefore, the user who purchases the imaging device 1 to manufacture the industrial robot with the imaging device 1 does not need to perform the calibration for the imaging device 1 at the time of manufacturing the industrial robot. For this reason, it is possible to reduce a work burden of the user who manufactures the industrial robot by using the imaging device 1 of the present invention.

The connector terminal group 44 is provided on a base side portion on the upper surface of the control substrate 41 and used for connecting the connector 6 to the control unit 4. A terminal group of the connector 6 is connected to the connector terminal group 44 to provide an electrical connection between the connector 6 and each component of controller 4.

The camera module connector 45 is provided on a tip side portion on the upper surface of the control substrate 41 and used for connecting the camera module 5 to the control unit 4. By connecting a corresponding connector 54 (see Fig. 5) of the camera module 5 to the camera module connector 45, it is possible to provide an electrical connection between the camera module connector 45 and each component of the controller 4.

The LDO chip 46 is provided on a portion between the connector terminal group 44 and the memory 43 on the upper surface of the control substrate 41 and used for stabilizing a voltage of electrical power supplied through the connector 6 connected to the connector terminal group 44. The electrical power supplied through the connector 6 is inputted to the LDO chip 46 and the electrical power having the stabilized voltage is supplied to each component of the control unit 4 such as the control processor 42 from the LDO chip 46. The clock chip 47 is provided on a portion nearer to the base end than the control processor 42 on the lower surface of the control substrate 41 and transmits a clock signal to the control processor 42.

The camera module 5 of the internal structure 3 is located on the tip side than the control unit 4 in the housing 2 in the state that the imaging device 1 is assembled as shown in Fig. 6. The camera module 5 is configured to image the outside on the tip side of the housing 2 through the tip side opening 21 of the housing 2 in response to the control from the control processor 42 of the control unit 4. As shown in Fig. 5, the camera module 5 includes a lens unit 51, an image sensor 52, an FPC substrate 53 having wires for connecting between the image sensor 52 and the control unit 4 and the connector 54 connected to the camera module connector 45 of the control unit 4.

The lens unit 51 is a fixed focus optical system constituted of one or more spherical or aspherical lenses. The camera module 5 is provided in the housing 2 so that an optical axis of the lens unit 51 is parallel to the lengthwise direction of the imaging device 1. Since the imaging device 1 should be attached to the tip end portion of the robot arm of the industrial robot, a distance between the camera module 5 and an object to be imaged is small. In the present embodiment, an F number of the lens unit 51 is 2.4 and a focal length of the lens unit 51 is 1.035 mm.

The image sensor 52 is disposed on the rear side (the negative direction of the Z-axis) of the lens unit 51 so that an imaging surface of the image sensor 52 is perpendicular to the optical axis of the lens unit 51 and a center of the imaging surface of the image sensor 52 substantially coincides with the optical axis of the lens unit 51. A distance between the lens unit 51 and the image sensor 52 is adjusted when manufacturing the camera module 5 depending on a required focus distance of the camera module 5 (a distance from a front principal point of the lens unit 51 to a position where an optical image of the object to be imaged is in the best focus) and then the lens unit 51 is fixed with respect to the image sensor 52. The focus distance of the camera module 5 is not particularly limited. For example, depending on a separation distance between the lens unit 51 and the image sensor 52, the focus distance of the camera module 5 can take any value in the present embodiment.

The image sensor 52 is a monochrome image sensor or a color image sensor. It is possible to use a CCD image sensor or a CMOS image sensor as the image sensor 52. A size and the number of pixels of the image sensor 52 are not particularly limited as long as it can secure a resolution enough for identifying a position, a size, a shape and the like of the object required for allowing the industrial robot to pick up the object based on the obtained image. For example, the number of pixels of the image sensor 52 is 1280 x 800 pixels and a size of each pixel is 1.12 µm x 1.12 µm in the present embodiment.

The FPC substrate 53 has the wire connecting between the image sensor 52 and the control unit 4. A tip end portion of the FPC substrate 53 is connected to the image sensor 52 and a base end portion of the FPC substrate 53 is connected to the connector 54. By connecting the connector 54 mounted on the FPC substrate 53 to the camera module connector 45 of the control unit 4, it is possible to provide an electrical connection between the control unit 4 and the image sensor 52.

The camera module 5 images the outside on the tip side of the housing 2 in accordance with the control from the control processor 42 of the control unit 4. Alternatively, the camera module 5 may image the outside on the tip side of the housing 2 in accordance with the control from the control processor 42 or may image the outside on the tip side of the housing 2 at predetermined intervals or at an arbitrary timing.

The connector 6 of the internal structure 3 is connected to the connector terminal group 44 of the control unit 4. As shown in Fig. 6, the connector 6 is provided in the housing 2 so that the tip portion of the connector 6 (the insertion port for the mating connector) is exposed to the outside through the base side opening 22 of the housing 2 in the state the imaging device 1 is assembled. The connector 6 is a receptacle connector into which the mating plug connector can be inserted. When the mating connector is inserted into the insertion port of the connector 6 which is exposed to the outside through the base side opening 22 of the housing 2, an electrical connection between the imaging device 1 and the external device is provided. Further, the electrical power is provided from the external device to each component of the controller 4 through the connector 6.

The connector 6 is not particularly limited as long as it can provide the electrical connection between the imaging device 1 and the external device. For example, a USB connector can be used as the connector 6. Further, as shown in Fig. 6, the conductive elastic member 9 is provided between the upper surface of the connector 6 and the inner surface of the housing 2 in the state that the imaging device 1 is assembled. In the state that the imaging device 1 is assembled, the connector 6 is pressed from the upper side by the conductive elastic member 9 and thus the connector 6 is fixed in the housing 2. This prevents the connector 6 from wobbling when the mating connector is inserted into the insertion port of the connector 6.

Further, the connector 6 is configured so that a ground terminal of the mating connector is electrically connected to the housing 2 through the conductive elastic member 9 when the mating connector is inserted into the insertion port of the connector 6. With this configuration, a ground potential of the mating connector becomes equal to a ground potential of the imaging device 1.

The holder 7 of the internal structure 3 is used for fixedly holding the control unit 4, the camera module 5 and the connector 6 described above in the housing 2. As shown in Fig. 5, the holder 7 includes a rear holder 71, a front holder 72 and a camera module holder 73. In addition, the holder 7 has an elongated substantially cylindrical shape corresponding to the inner surface of the housing 2 as a whole. The holder 7 is formed from an insulating material. In particular, it is preferable that the holder 7 is formed from an insulating resin material from a viewpoint of reducing the weight of the imaging device 1.

As shown in Fig. 4, the rear holder 71, the front holder 72 and the camera module holder 73 are connected to each other in a state that the control unit 4, the camera module 5 and the connector 6 are held. As a result, the holder 7 fixedly holding the control unit 4, the camera module 5 and the connector 6 is formed.

As shown in Fig. 6, the rear holder 71 is located on the base side of the housing 2 in the state that the imaging device 1 is assembled. The rear holder 71 has a base portion 711 for closing the base side opening 22 of the housing 2, a press-fitted portion 712 which protrudes toward the tip side from a tip end surface of the base portion 711 and a semi-cylindrical portion 713 which protrudes toward the tip side from the press-fitted portion 712.

The base portion 711 is a disk-shaped portion having an outer diameter substantially equal to the outer diameter of the enlarged diameter portion 23 of the housing 2. As shown in Fig. 6, the base portion 711 is located at the outside on the base side of the housing 2 in the state that the imaging device 1 is assembled. An opening 714 is formed in the base portion 711 to expose the tip portion of the connector 6 (the insertion port for the mating connector) toward the outside on the base side of the housing 2. Further, a pair of engagement protrusions 715 are formed so as to protrude toward the tip side from an upper edge portion of the tip end surface of the base portion 711. As described above, when the internal structure 3 is inserted into the housing 2, the pair of engagement protrusions 715 are engaged with the pair of engagement recesses 233 of the enlarged diameter portion 23 of the housing 2, and thereby the internal structure 3 is positioned with respect to the housing 2.

The press-fitted portion 712 is a disc-shaped portion protruding toward the tip side from the tie end surface of the base portion 711. An outer diameter of the press-fitted portion 712 is substantially equal to an inner diameter of the enlarged diameter portion 23 of the housing 2. By press-fitting the press-fitted portion 712 into the enlarged diameter portion 23 of the housing 2, it is possible to fix the holder 7 in the housing 2.

The semi-cylindrical portion 713 is a semi-cylindrical portion protruding toward the tip side from a lower portion of the press-fitted portion 712. As shown in Fig.4, X-axis direction edges of a base end portion of the control substrate 41 of the control unit 4 are placed on an upper end surface of the semi-cylindrical portion 713. Further, as shown in Fig. 5, a recess 716 for receiving an insertion protrusion 726 of the front holder 72 is formed on a tip end portion of the semi-cylindrical portion 713. By inserting the insertion protrusion 726 of the front holder 72 into the recess 716, the rear holder 71 and the front holder 72 are connected to each other. As shown in Fig. 6, the press-fitted portion 712 and the semi-cylindrical portion 713 of the rear holder 71 are located inside the enlarged diameter portion 23 of the housing 2 in the state that the imaging device 1 is assembled. Further, the screw hole 717 to be screwed with the set screw 234 is formed in a lower portion of the semi-cylindrical portion 713.

The front holder 72 has a cylindrical portion 721 and a semi-cylindrical portion 722 formed so as to protrude toward the base side from the cylindrical portion 721. The cylindrical portion 721 is a cylindrical portion whose base end portion is opened and whose tip end portion is closed. Portions of an outer circumference of the cylindrical portion 721 in the X-axis direction are cut out. Slits 723 into which a tip end portion of the control substrate 41 of the control unit 4 is inserted are formed in base end surfaces of the cut portions of the cylindrical portion 721. By inserting the tip end portion of the control substrate 41 of the control unit 4 into the slits 723, it is possible to fixedly hold the control unit 4. Further, a columnar portion 724 on which the camera module 5 should be placed and a pair of engagement protrusions 725 for connecting the front holder 72 and the camera module holder 73 are formed on a tip end surface of the cylindrical portion 721.

The columnar portion 724 is a cylindrical portion having an outer diameter smaller than the outer diameter of the cylindrical portion 721. In the state that the imaging device 1 is assembled, the image sensor 52 of the camera module 5 is placed on the columnar portion 724 as shown in Fig. 6. The pair of engagement protrusions 725 are protrusions formed on a tip end portion of the cylindrical portion 721 and on both sides of the columnar portion 724 in the X-axis direction so as to protrude toward the tip side.

The semi-cylindrical portion 722 is a semi-cylindrical portion protruding toward the base side from a base end surface of the cylindrical portion 721. As shown in Figs. 4 and 6, the X-axis direction edges of the base end portion of the control substrate 41 of the control unit 4 are placed on the upper end surface of the semi-cylindrical portion 713. As shown in Fig. 6, the control substrate 41 of the control unit 4 is placed on the upper end surface of the semi-cylindrical portion 713 of the rear holder 71 and the upper end surface of the semi-cylindrical portion 722 of the front holder 72. Further, the base end surface of the control substrate 41 is supported by the base portion 711 of the rear holder 71 and the tip end portion of the control substrate 41 is inserted into the slits 723. As a result, the control unit 4 is fixedly held by the holder 7.

Further, an insertion protrusion 726 to be inserted into the recess 716 of the rear holder 71 is formed on the base end surface of the semi-cylindrical portion 722. By inserting the insertion protrusion 726 into the recess 716 of the rear holder 71, it is possible to connect the rear holder 71 and the front holder 72. An opening 727 through which the FPC substrate 53 of the camera module 5 is passed is formed in the lower surface of the semi-cylindrical portion 713. As shown in Fig. 6, in the state that the imaging device 1 is assembled, most parts of the cylindrical portion 721 of the front holder 72 are located inside the connection portion 25 and the small diameter portion 24 of the housing 2 and the semi-cylindrical portion 722 of the front holder 72 is located inside the enlarged diameter portion 23 of the housing 2.

The camera module holder 73 is attached to a tip end portion of the front holder 72. The camera module holder 73 is used for holding the camera module 5 between the columnar portion 724 of the front holder 72 and the camera module holder 73. The camera module holder 73 includes a cylindrical main body 731, an opening 732 formed in a tip end surface of the main body 731, a recess 733 formed on the tip end surface of the main body 731 and engagement recesses 734 formed on a base end surface of the main body 731.

The main body 731 has a cylindrical shape and holds the camera module 5 therein. By engaging the engagement recesses 734 of the camera module holder 73 with the engagement protrusions 725 of the front holder 72 in a state that the image sensor 52 of the camera module 5 is placed on the columnar portion 724 of the front holder 72 as shown in Fig. 6, it is possible to connect the front holder 72 and the camera module holder 73 with fixedly holding the camera module 5 between the front holder 72 and the camera module holder 73. Further, in the state that the camera module 5 is held between the front holder 72 and the camera module holder 73, the camera module 5 can image the outside on the tip side of the holder 7 from the opening 732 of the camera module holder 73.

Further, a recess 733 to which the cover glass 8 for protecting the camera module 5 is attached is formed on a tip end surface of the main body 731. The cover glass 8 is fixed in the recess 733 by an adhesive or the like.

The holder 7 described above fixedly holds the control unit 4, the camera module 5 and the connector 6. The set screw 234 is passed through the through hole 232 formed in the housing 2 and screwed with the screw hole 717 formed in the holder 7 in the state that the internal structure 3 is inserted into the housing 2, and thereby the internal structure 3 is fixed in the housing 2 and the imaging device 1 is assembled.

As described above, the weight and the size of the imaging device 1 of the present invention are reduced to a level equal to or less than a weight and a size of a male screw (for example, an M10 screw) meeting a predetermined industrial standard. Therefore, by using the imaging device 1 of the present invention at the tip end portion of the robot arm (the movable portion) of the industrial robot, it is possible to reduce a weight and a size of the robot arm. As a result, it is possible to reduce power consumption, a cost and a size of the industrial robot.

Further, in the imaging device 1 of the present invention, the parameters required for correcting the distortion of the image obtained by the camera module 5 are stored in the memory 43 of the control unit 4. The user who manufactures the industrial robot with the imaging device 1 can obtain the parameters required for correcting the distortion of the image obtained by the camera module 5 only by reading the parameters stored in the memory 43 of the control unit 4. Therefore, by using the imaging device 1 of the present invention, it is possible to eliminate the necessity of the calibration when manufacturing the industrial robot.

Further, since the screw thread 241 meeting the predetermined industry standard is formed on the small diameter portion 24 of the housing 2 of the imaging device 1 as described above, it is very easy to fix and attach the imaging device 1 to an arbitrary other device (such as the industrial robot).

Fig. 7 shows an example of an attachment for the imaging device 1. An attachment 10A shown in Fig. 7 is a substantially L-shaped member formed from a rigid material such as a metallic material. The attachment 10A has a plate-like long piece portion 11 and a plate-like short piece portion 12 provided to stand from an edge portion of a tip end portion of the long piece portion 11.

The long piece portion 11 is a portion which should face a lateral side or the like of the robot arm. Through holes 13 through which fixing tools such as screws should be respectively passed are formed in the long piece portion 11. The short piece portion 12 is a plate-like portion provided to stand from the edge portion of the tip end portion of the long piece portion 11. A rectangular opening 14 through which the imaging device 1 should be passed is formed in the short piece portion 12. A size of the rectangular opening 14 is larger than the outer diameter of the connection portion 25 of the housing 2 and is substantially equal to a size of the portion of the enlarged diameter portion 23 of the housing 2 where the D-cut portions 231 are formed. Therefore, when the imaging device 1 is passed through the rectangular opening 14, the end surfaces of the D-cut portions 231 of the enlarged diameter portion 23 of the housing 2 abut against the short piece portion 12 of the attachment 10A.

As shown in Fig. 8, the tip end portion of the imaging device 1 is passed through the rectangular opening 14 of the attachment 10A and a fixing tool 20 having a female screw structure meeting the predetermined industrial standard (for example, the M10 screw standard) is screwed with the screw thread 241 of the small diameter portion 24 of the housing 2 of the imaging device 1 which protrudes toward the tip side through the rectangular opening 14. With this operation, it is possible to easily fix the imaging device 1 to the attachment 10A.

As shown in Fig. 9, in a state that the imaging device 1 is attached to the attachment 10A, the D-cut portions 231 formed on the enlarged diameter portion 23 of the housing 2 are engaged with the rectangular opening 14 of the attachment 10A, and thereby rotation of the imaging device 1 is prevented. Furthermore, since the end surfaces of the D-cut portions 231 of the enlarged diameter portion 23 of the housing 2 abut against the short piece portion 12 of the attachment 10A, the imaging device 1 is positioned with respect to the attachment 10A.

In the state that the imaging device 1 is fixed to the attachment 10A as described above, the long piece portion 11 of the attachment 10A faces the tip end portion of the robot arm. Thereafter, fixing tools such as screws are respectively passed through the through holes 13 formed in the long piece portion 11 of the attachment 10A. By respectively screwing the fixing tools passed through the through holes 13 with female screw structures formed on the tip end portion of the robot arm, it is possible to easily attach the attachment 10A to the tip end portion of the robot arm.

Fig. 10 shows another example of the attachment for the imaging device 1. An attachment 10B shown in Fig. 10 has the same configuration as the configuration of the attachment 10A shown in Fig. 7 except that the shape and the size of the opening 14 are modified and a groove 15 is formed on the base end surface of the short piece portion 12.

A circular opening 14 through which the imaging device 1 should be passed is formed in the short piece portion 12. A diameter of the circular opening 14 is substantially equal to the outer diameter of the connecting portion 25 of the housing 2. Thus, when the imaging device 1 is passed through the circular opening 14, the end surface of the enlarged diameter portion 23 of the housing 2 abuts against the short piece portion 12 of the attachment 10B. Further, the D-cut portions 231 of the enlarged diameter portion 23 of the housing 2 are engaged with the groove 15 of the attachment 10B.

As shown in Fig. 11, the tip end portion of the imaging device 1 is passed through the circular opening 14 of the attachment 10B and the fixing tool having the female screw structure meeting the predetermined industrial standard (e.g., M10 screw standard) is screwed with the screw thread 241 of the small diameter portion 24 of the housing 2 of the imaging device 1 which protrudes toward the tip side through the rectangular opening 14. With this operation, it is possible to easily fix the imaging device 1 to the attachment 10B.

As shown in Fig. 12, in a state that the imaging device 1 is attached to the attachment 10B, the enlarged diameter portion 23 of the housing 2 is engaged with the short piece portion 12 of the attachment 10A and the D-cut portions 231 of the enlarged diameter portion 23 of the housing 2 are engaged with the groove 15 of the attachment 10B. As a result, the rotation of the imaging device 1 is prevented and the imaging device 1 is positioned with respect to the attachment 10B. Even in a case of using the above-mentioned attachment 10B, it is possible to easily attach the imaging device 1 of the present invention to the tip end portion of the robot arm as is the case of using the attachment 10A.

As described above, the imaging device 1 of the present invention can be easily attached to the robot arm through the very simple attachment 10A or 10B. Therefore, by using the imaging device 1 of the present invention, it is possible to drastically reduce the work burden of the user who manufactures the industrial robot.

It should be noted that the attachments 10A and 10B described above are merely examples of a simple attachment for the imaging device 1 of the present invention. A person having ordinary skills in the art would be able to reach various configurations of the attachment for attaching the imaging device 1 of the present invention to the tip end portion of the robot arm. Even with using such an attachment having any one of the various configurations, it is possible to easily attach the imaging device 1 of the present invention to the tip end portion of the robot arm.

### <Imaging system>

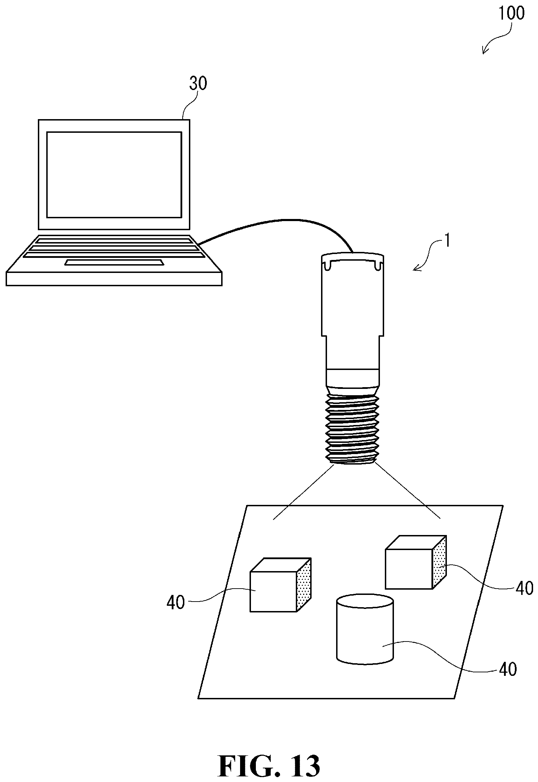

Next, an imaging system according to an embodiment of the present invention will be described in detail with reference to Fig. 13. Fig. 13 is a schematic diagram showing the imaging system according to the embodiment of the present invention.

An imaging system 100 shown in Fig. 13 contains the imaging device 1 of the present invention and an image processing device 30 communicatively connected to the imaging device 1 by a wire connection through the connector 6 of the imaging device 1. The image processing device 30 may be any computing device such as a laptop computer, a desktop computer, a notebook computer, a workstation, a mainframe computer and a server. The image processing device 30 is configured to receive the image obtained by the camera module 5 of the imaging device 1 and perform the image processing for correcting the distortion of the image with reference to the parameters stored in the memory 43 of the control unit 4 of the imaging device 1.

In the imaging system 100, the imaging device 1 images one or more objects 40 such as parts at predetermined intervals (such as every several seconds, every several tens of seconds and every several minutes) or at an arbitrary timing in response to control from the control processor 42 of the control unit 4. In this regard, the intervals and the timing of the imaging for each object 40 in response to the control from the control processor 42 can be arbitrarily set by an external device such as the image processing device 30.

The image processing device 30 receives the image obtained by the camera module 5 of the imaging device 1. After that, the image processing device 30 accesses the memory 43 of the control unit 4 of the imaging device 1 to read the parameters stored in the memory 43, which are required for correcting the distortion of the image. Further, the image processing device 30 performs the image processing for correcting the distortion of the image with the parameters stored in the memory 43.

With this configuration, the imaging system 100 of the present invention can correct the distortion of the image obtained by the imaging device 1. The image whose distortion has been corrected by the image processing can be used in various applications. For example, it is possible to accurately identify a position, a size and a shape of the object 40 based on the image whose distortion has been corrected by the image processing. Further, the position, the size and the shape of the object 40 can be used for controlling the robot arm of the industrial robot for picking up, assembling or packing the object 40.

### <Industrial robot>

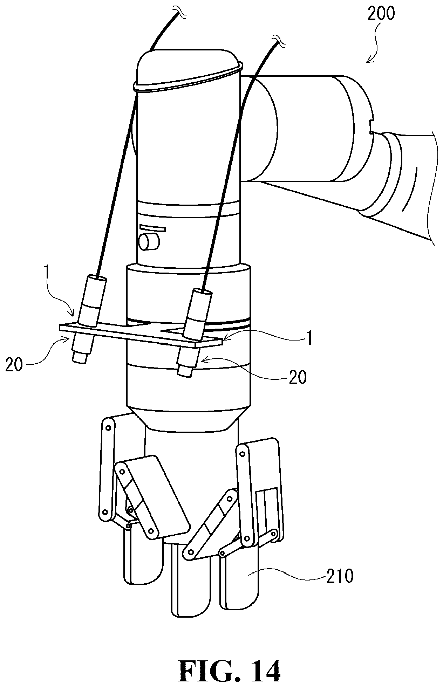

Next, an industrial robot according to an embodiment of the present invention will be described in detail with reference to Fig. 14. Fig. 14 is a schematic diagram showing a robot arm of the industrial robot according to the embodiment of the present invention.

An industrial robot according to the embodiment of the present invention includes a robot arm 200 having a robot hand 210 for picking up an object such as parts, one or more imaging devices 1 of the present invention provided at a tip end portion of the robot arm 200 and a control device (not shown in the drawings) for receiving the image obtained by the camera module 5 of the imaging device 1 and performing the image processing for correcting the distortion of the image with reference to the parameters stored in the memory 43 of the control unit 4 of the imaging device 1.

The robot arm 200 is constituted of a serial link multi-joint mechanism in which a plurality of links and a plurality of joints connecting the plurality of links are connected in series and which has three or more axis degrees of operation freedom. The robot arm 200 is communicatively connected to the control device through a wired or wireless connection. Thus, the robot arm 200 can perform motions in three or more axis directions in response to control from the control device.

The robot arm 200 has the robot hand 210. The robot hand 210 is constituted of one or more robot fingers provided at the tip end portion of the robot arm 200. The robot arm 200 can drive the robot fingers to pick up the object such as parts in response to the control from the control device.

The one or more imaging devices 1 of the present invention are attached to the tip end portion of the robot arm 200 through an arbitrary attachment such as the attachment 10A or 10B and the fixing tool 20 shown in Figs. 7 to 12. Although two imaging devices 1 are attached to the tip end portion of the robot arm 200 in the illustrated aspect, the number of imaging devices 1 attached to the tip end portion of the robot arm 200 can be appropriately changed as necessary. Each of the imaging devices 1 is communicatively connected to the control device by the wired connection through the connector 6 of each imaging device 1.

The control device may be any computing device such as a laptop computer, a desktop computer, a notebook computer, a workstation, a mainframe computer and a server. The control device is configured to receive the image obtained by the camera module 5 of the imaging device 1 and perform the image processing for correcting the distortion of the image with reference to the parameters stored in the memory 43 of the control unit 4 of the imaging device 1. Further, the control device is configured to control the robot arm 200 based on the image to which the image processing is subjected and whose distortion has been corrected to allow the robot hand 210 of the robot arm 200 to pick up the object such as parts.

In the industrial robot of the present invention, the imaging device 1 uses the camera module 5 to image the object such as parts at predetermined intervals (such as every several seconds, every several tens of seconds and every several minutes) or at arbitrary timing in accordance with the control from the control processor 42 of the control unit 4 and the control device receives the image obtained by the camera module 5. In this regard, the intervals and the timing of the imaging for the object in accordance with the control from the control processor 42 can be arbitrarily set through an external device such as the control device.

After that, the control device accesses the memory 43 of the control unit 4 of the imaging device 1 to read the parameters required for correcting the distortion of the image stored in the memory 43. In addition, the control device performs the image processing for correcting the distortion of the image with the parameters stored in the memory 43. Thus, the control device can obtain the image of the object whose distortion has been corrected.

After that, the control device uses the image of the object whose distortion has been corrected to identify the position, the size and the shape of the object. Since the distortion of the image of the object has been corrected by the image processing, the control device can accurately identify the position, the size and the shape of the object based on the image of the object.

Furthermore, in the case where two or more imaging devices 1 are used in the industrial robot, it is possible to measure a distance from the robot hand 210 to the object by measuring a disparity between two images respectively obtained by the two imaging devices 1.

The control device controls the robot arm 200 based on the position, the size and the shape of the object (if the two or more imaging device 1 are used in the industrial robot, the control device controls the robot arm 200 based on the distance from the robot hand 210 to the object in addition to the position, the size and the shape of the object) to allow the robot hand 210 of the robot arm 200 to pick up the object.

As described above, the weight and the size of the imaging device 1 are reduced to the level equal to or less than the weight and the size of the male screw (such as the M10 screw) meeting the predetermined industry standard. Therefore, by using the imaging device 1 of the present invention at the tip end portion of the robot arm 200, it is possible to reduce a weight and a size of the robot arm 200. As a result, it is possible to reduce power consumption, a cost and a size of the industrial robot of the present invention.

Further, in the imaging device 1, the parameters required for correcting the distortion of the image obtained by the camera module 5 are stored in the memory 43 of the control unit 4. A user who manufactures the industrial robot with the imaging device 1 can obtain the parameters required for correcting the distortion of the image obtained by the camera module 5 only by reading the parameters stored in the memory 43 of the control unit 4. Therefore, by using the imaging device 1, it is possible to eliminate the necessity of the calibration when manufacturing the industrial robot of the present invention.

Although the imaging device, the imaging system and the industrial robot of the present invention have been described above with reference to the illustrated embodiments, the present invention is not limited thereto. Each configuration of the present invention can be replaced by any configuration capable of performing the same function, or any configuration can be added to each configuration of the present invention.

A person having skill in the art and the field to which the present invention belongs would be able to carry out modifications of the described configurations of the imaging device, the imaging system and the industrial robot of the present invention without meaningfully departing from the principle, the idea and the scope of the present invention. Further, the imaging device, the imaging system and the industrial robot having modified configurations are also involved within the scope of the present invention.

For example, the number and types of the components of the imaging device shown in Figs. 2 to 12, the number and types of the components of the imaging system shown in Fig. 13 and the number and types of the components of the industrial robot shown in Fig. 14 are merely illustrative examples and the present invention is not necessarily limited thereto. An aspect in which any component is added or combined or any component is omitted without departing from the principle and the idea of the present invention is also involved within the scope of the present invention.

### Industrial Applicability

In the present invention, the weight and the size of the imaging device are reduced to the level equal to or less than the weight and the size of the male screw (for example, the M10 screw) meeting the predetermined industrial standard. Thus, it is possible to reduce the driving force of the industrial robot required when the imaging device of the present invention is provided at the tip end portion of the movable portion (the robot arm) of the industrial robot. By using the imaging device of the present invention, it is possible to suppress the power consumption of the industrial robot and reduce the cost and the size of the industrial robot. Further, in the present invention, the parameters required for correcting the distortion of the image obtained by the imaging device are stored in the memory of the control unit of the imaging device. The user who manufactures the industrial robot with the imaging device can obtain the parameters required for correcting the distortion of the image obtained by the imaging device only by reading the parameters stored in the memory of the controller of the imaging device. Therefore, by using the imaging device of the present invention, it is possible to eliminate the necessity of calibration when manufacturing the industrial robot. For the reasons stated above, the present invention has industrial applicability.

## Claims

1. An imaging device, comprising:
an elongated cylindrical housing having openings on a tip side and a base side;
a control unit provided in the housing and having a control processor and a memory;
a camera module provided in the housing so as to be capable of imaging an outside on the tip side of the housing from the opening of the housing on the tip side in response to control from the control processor of the control unit; and
a connector provided in the housing so that a tip portion of the connector is exposed from the opening of the housing on the base side toward an outside on the base side of the housing,
wherein the memory of the control unit stores parameters for correcting distortion of an image obtained by the camera module.

2. The imaging device as claimed in claim 1, wherein the housing has a cylindrical enlarged diameter portion formed on a base end portion of the housing and a cylindrical small diameter portion formed on a tip end portion of the housing nearer to the tip side than the enlarged diameter portion,
wherein an outer diameter of the enlarged diameter portion is larger than an outer diameter of the small diameter portion, and
wherein a screw thread is formed on an outer periphery of the small diameter portion.

3. The imaging device as claimed in claim 2, wherein the enlarged diameter portion and the small diameter portion of the housing are formed integrally with each other.

4. The imaging device as claimed in claim 2 or 3, wherein the screw thread of the small diameter portion is configured to be screwed with a fixing tool having a female screw structure meeting a predetermined industry standard.

5. The imaging device as claimed in any one of claims 1 to 4, wherein the housing is formed from a conductive material, and
wherein the connector is fixed in the housing by a conductive elastic member provided between an upper surface of the connector and an inner surface of the housing.

6. The imaging device as claimed in claim 5, wherein the connector is configured so that a ground terminal of a mating connector is electrically connected to the housing through the conductive elastic member when the mating connector is inserted into the connector.

7. The imaging device as claimed in any one of claims 1 to 6, wherein the camera module includes a lens unit and an image sensor, and
wherein the lens unit and the image sensor are provided in the housing so that an optical axis of the lens unit is parallel to a lengthwise direction of the housing.

8. An imaging system comprising:
an imaging device defined by any one of claims 1 to 7; and
an image processing device for receiving the image obtained by the camera module of the imaging device and performing image processing in order to correct the distortion of the image with reference to the parameters stored in the memory of the control unit of the imaging device.

9. An industrial robot for picking up an object, comprising:
a robot arm having a robot hand for picking up the object;
an imaging device defined by any one of claims 1 to 7 and provided at a tip end portion of the robot arm; and
a control device for receiving the image obtained by the camera module of the imaging device and performing image processing in order to correct the distortion of the image with reference to the parameters stored in the memory of the control unit of the imaging device,
wherein the control device is configured to control the robot arm based on the image on which the image processing is subjected to allow the robot hand to pick up the object.
